# EUROPEAN PATENT APPLICATION

(11) **EP 4 760 034 A1**
(43) Date of publication of application: **17.06.2026**
(21) Application number: 25758699.0
(22) Date of filing: 18.02.2025
(51) Int. Cl.: E05C 9/02, E05C 9/18, H01M 50/244

(54) **DOOR OPENING AND CLOSING SYSTEM AND ENERGY STORAGE DEVICE INCLUDING SAME**

(30) Priority: 19.02.2024 KR 20240023190
(71) Applicant: LG Energy Solution, Ltd., Seoul 07335 (KR)
(72) Inventor: YU, Kieun, Daejeon 34122 (KR); KIM, Kiyoun, Daejeon 34122 (KR); SHIN, Jongchan, Daejeon 34122 (KR); YOON, Kyu Heok, Daejeon 34122 (KR)
(74) Representative: Plasseraud IP
(86) International application number: PCT/KR2025/099432
(87) International publication number: WO 2025/178450

(57) **Abstract**

The present disclosure provides a door opening/closing system applied to a case having an accommodation space therein. The door opening/closing system according to certain embodiments comprises: a door that can move in one direction to cover the accommodation space; a rod bar coupled to the door; a handle coupled to the rod bar; a roller support coupled to the rod bar and moving integrally with the rod bar; a roller coupled to an end of the roller support; and a roller bracket coupled to the case. When a user moves the handle up or down, the rod bar moves integrally with the handle. The roller bracket comprises a rail that extends along moving route of the roller and corresponds to the roller.

## Description

### [TECHNICAL FIELD]

### Cross-Reference to Related Application so

This application claims priority to and the benefit of Korean Patent Application no. KR10-2024-0023190, filed on February 19, 2024, with the Korean Intellectual Property Office, the disclosure of which is hereby incorporated by reference in its entirety

The present disclosure relates to a door opening/closing system and an energy storage device including the same, and more particularly, to a door opening/closing system that can operate even in a narrow space without exposing lock-related devices to the outside of the door, and an energy storage device including the same.

### [BACKGROUND ART]

Secondary batteries which are highly applicable to various products and exhibit superior electrical properties such as high energy density, etc. are commonly used not only in portable devices but also in electric vehicles (EVs) or hybrid electric vehicles (HEVs) driven by electrical power sources. Such a secondary battery is widely used as a novel energy source for enhancing environment friendliness and energy efficiency, in that it has a primary advantage of remarkable reducing the use of fossil fuels, and also generates no by-products from the use of energy.

Secondary batteries widely used at present include lithium ion batteries, lithium polymer batteries, nickel cadmium batteries, nickel hydrogen batteries, nickel zinc batteries, and the like. An operating voltage of the unit secondary battery cell. namely unit battery cell, is about 2.5V to 4.5V. Therefore, when an output voltage higher than the operating voltage is required, a plurality of battery cells may be connected in series to configure a battery pack. In addition, depending on the charge/discharge capacity required for the battery pack, a plurality of battery cells may also be connected in parallel configure a battery pack. Thus, the number of battery cells included in the battery pack may be variously set in accordance with the required output voltage or charge/discharge capacity.

Meanwhile, when a plurality of battery cells are connected in series or in parallel to configure a battery pack, it is common to configure a battery module including at least one battery cell first and then configure a battery pack or a battery rack by using at least one battery module and adding other components.

Such secondary batteries are widely used in not only small devices such as portable electronic devices, but also medium- and large-scale devices such as electric vehicles and energy storage devices(ESS), and the use frequency thereof is rapidly increasing. Furthermore, in recent years, there is an increasing tendency to use residential battery packs for the purpose of storing electricity.

A door opening/closing system capable of opening/closing the case is generally applied to a case for accommodating a battery pack or a battery rack. The door included in the door opening/closing system is generally applied with a handle in which a user can open and close the door through an operation that moves up and down or rotates. Furthermore, the door opening/closing system may need to satisfy specific waterproof requirements (e.g., IP55 or higher).

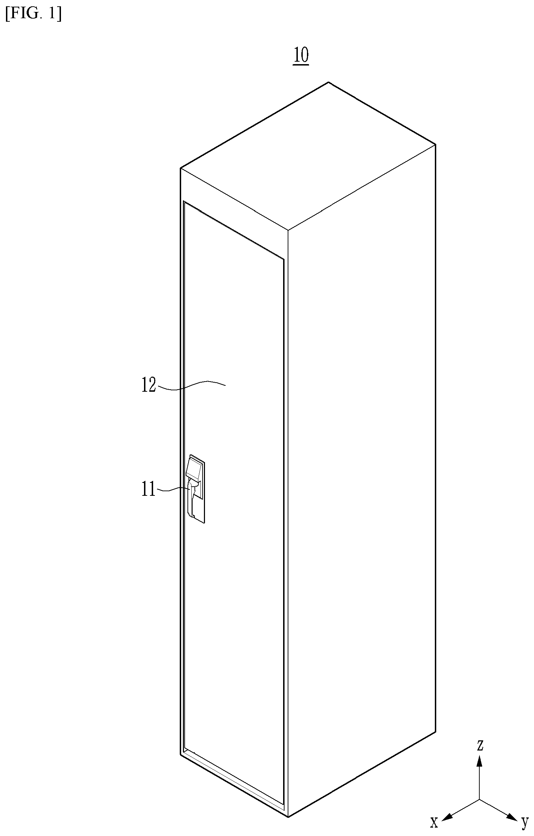

FIG. 1 is a perspective view showing a conventional energy storage device 10.

A conventional handle 11 is exposed to the outside of a conventional door 12, which impairs the fine view of a product. In addition, the conventional handle 11 protrudes to the outside of the conventional door 12 and occupies some space, which may reduce space utilization.

Therefore, there is a need for a door opening/closing system that satisfies waterproof requirements without having a configuration that exposes or protrudes to the outside of the door.

### [DETAILED DESCRIPTION OF THE INVENTION]

### [Technical Problem]

An object of the present disclosure is to provide a door opening/closing system that can operate even in a narrow space without exposing lock-related devices to the outside of the door, and specifically, to provide a door opening/closing system that can apply a handle and a roller and thus open and close the door through an operation of a handle even in a narrow space, without exposing a door opening/closing system except the handle to the outside.

However, the technical objects to be solved by embodiments of the present disclosure are not limited to the above-described objects, and can be variously expanded within the scope of the technical idea included in the present disclosure.

### [Technical Solution]

According to certain aspects of the present disclosure, there is provided a door opening/closing system applied to a case having an accommodation space therein, wherein the door opening/closing system comprises: a door that can move in one direction to cover the accommodation space; a rod bar coupled to the door; a handle coupled to the rod bar; a roller support coupled to the rod bar and moving integrally with the rod bar; a roller coupled to an end of the roller support; and a roller bracket coupled to the case. When a user moves the handle up or down, the rod bar moves integrally with the handle. The roller bracket comprises a rail that extends along moving route of the roller and corresponds to the roller.

When the roller is at a height corresponding to the roller bracket, the roller or the roller support may be restricted from moving in the one direction by the roller bracket.

The one direction may be a direction in which the door rotates around the portion where the door is coupled to the case.

The rail of the roller bracket may restrict the roller or the roller support from moving in the one direction.

When the rod bar moves up and down, the roller may move along the rail of the roller bracket.

The roller bracket may comprise a first plate extending vertically from the rail; and a second plate extending vertically from the first plate at one end of the first plate and parallel to the rail.

The second plate may be coupled to the case.

The first plate may connect the rail and the second plate.

According to certain other aspects of the present disclosure, there is provided an energy storage device comprising the door opening/closing system.

A battery pack or a battery rack may be accommodated inside the case.

### [Advantageous Effects]

According to certain embodiments of the present disclosure, a door opening/closing system applies a handle and a roller, so that the door opening/closing system except the handle is not exposed to the outside, and the door can be opened and closed through an operation of a handle even in a narrow space. Thereby, it is possible to improve the fine view and space utilization of a product.

The effects of the present disclosure are not limited to the effects mentioned above, and additional other effects not mentioned above will be clearly understood from the description of the appended claims by those skilled in the art.

### [BRIEF DESCRIPTION OF THE DRAWINGS]

FIG. 1 is a perspective view showing a conventional energy storage device.
FIG. 2 is a perspective view showing an energy storage device according to certain embodiments of the present disclosure.
FIG. 3 is a perspective view showing a door opening/closing system according to certain embodiments of the present disclosure.
FIG. 4 is an enlarged perspective view of a section A of FIG. 3.
FIG. 5 is a plan view of the door opening/closing system of FIG. 4 as viewed along the +z-axis direction on the xy plane.
FIG. 6 is a plan view of the door opening/closing system of FIG. 4 as viewed along the +y-axis direction on the xz plane.
FIG. 7 is a perspective view showing a point in time when the rod bar of FIG. 3 moves in the +z-axis direction due to the operation of a handle by a user to open the door opening/closing system.
FIG. 8 is a plan view of the door opening/closing system of FIG. 7 as viewed along the +y-axis direction on the xz plane.
FIG. 9 is a perspective view showing an energy storage device according to certain embodiments of the present disclosure.
FIG. 10 is a plan view of the energy storage device of FIG. 9 as viewed along the -z-axis direction on the xy plane.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

Portions that are irrelevant to the description will be omitted to clearly describe the present disclosure, and same reference numerals designate same or like elements throughout the description.

Further, in the drawings, the size and thickness of each element are arbitrarily illustrated for convenience of description, and the present disclosure is not necessarily limited to those illustrated. The drawings depict the thickness in an enlarged scale to clearly show different layers and regions. Further, the drawings exaggerate the thickness of a certain layer or region to facilitate the description thereof.

Further, when a layer, film, region, plate or the like is disposed "on" a specific part, the description includes not only a case where the layer, film, region, plate or the like is disposed "directly on" the specific part, but also a case where the layer, film, region, plate or the like is disposed on the specific part via another part. When a part is disposed "directly on" another part, this indicates that no new component is present between the two parts. Further, when a component is disposed "on" a reference part, this indicates that the component is present at the top of or under the reference part, and does not necessarily indicate that the component is disposed only at the top of the reference part, which is opposite to the direction of gravity.

Throughout the descriptions herein, when a certain part "includes" a component, this does not indicate that the certain part excludes other components, but indicates that the part may further include other components, unless otherwise defined.

Throughout the descriptions herein, the terms "in a plan view" indicate viewing an object from above, and the terms "in a cross-sectional view" indicate viewing a vertical cross section of an object from side.

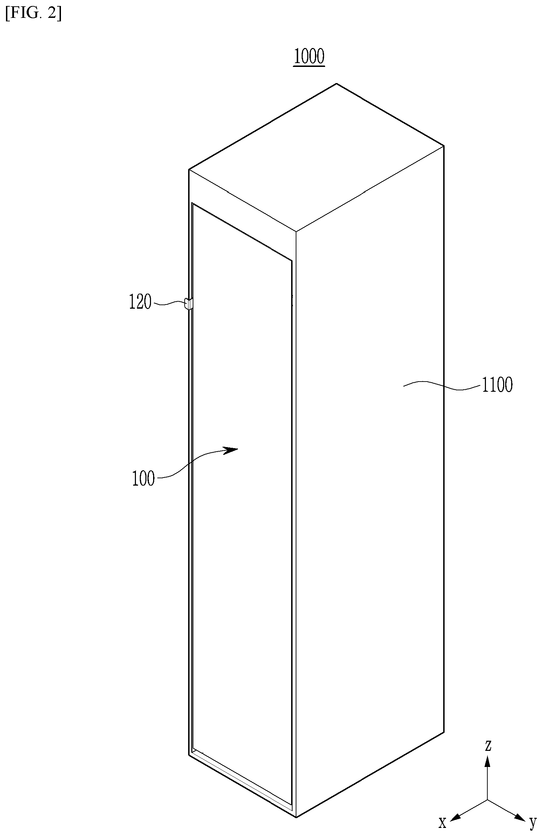

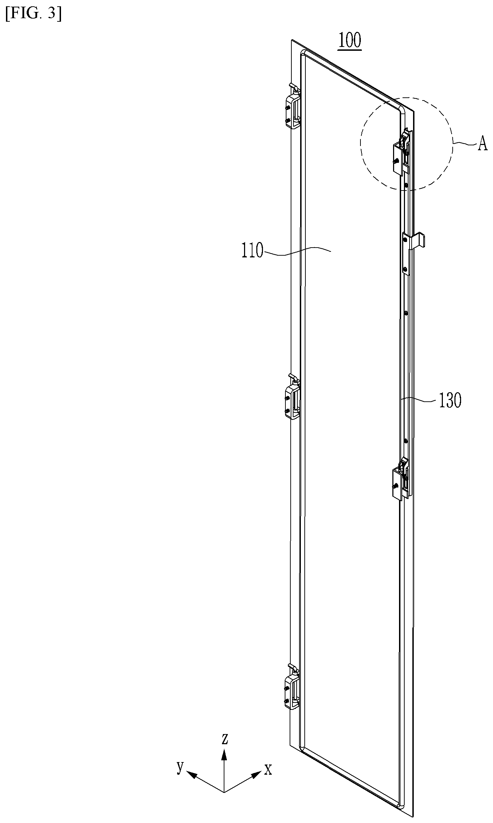

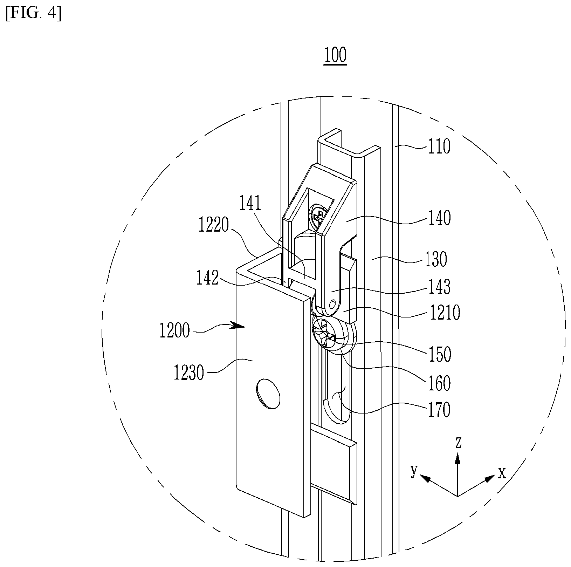

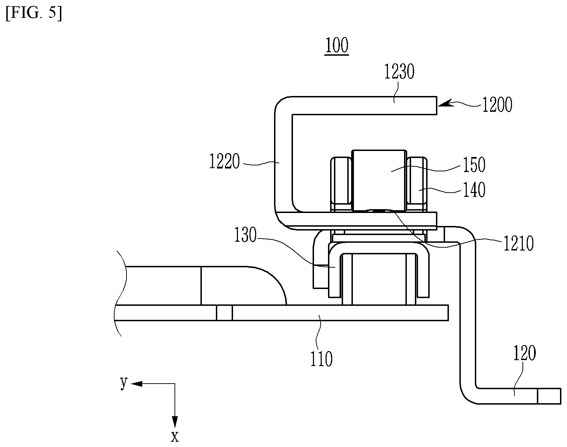

FIG. 2 is a perspective view showing an energy storage device 1000 according to certain embodiments of the present disclosure. FIG. 3 is a perspective view showing a door opening/closing system 100 according to certain embodiments of the present disclosure. Specifically, FIG. 3 is a perspective view showing a roller bracket 1200 coupled to a case 1100 along with a door opening/closing system 100. FIG. 4 is an enlarged perspective view of a section A of FIG. 3. Specifically, FIG. 4 is a perspective view showing a point in time when the door opening/closing system 100 is closed. FIG. 5 is a plan view of the door opening/closing system of FIG. 4 as viewed along the +z-axis direction on the xy plane.

Referring to FIGS. 2 to 5, a door opening/closing system according to one embodiment of the present disclosure is a door opening/closing system 100 applied to a case 1100 having an accommodation space therein. The door opening/closing system 100 according to certain embodiments of the present disclosure includes a door 110 that can move in one direction to cover the accommodation space; a rod bar 130 coupled to the door 110; a handle 120 coupled to the rod bar 130; a roller support 140 coupled to the rod bar 130 and moving integrally with the rod bar 130; a roller 150 coupled to the end of the roller support 140; and a roller bracket 1200 coupled to the case 1100. When a user moves the handle 120 up and down, the rod bar 130 moves integrally with the handle 120. The roller bracket 1200 includes a rail 1210 that extends along the moving route of the roller 150 and corresponds to the roller 150.

The door 110 may be hinge-coupled to the case 1100 at one edge of the case 1100. The door 110 may be opened and closed by rotating around the hinge.

The rod bar 130 may be disposed on one side edge of the door 110 toward the inside of the case 1100 (in the -x-axis direction of FIG. 2).

In one embodiment, the rod bar 130 may be fixed to the door 110 by a bolt/nut combination. Specifically, the rod bar 130 may be provided with a hole 170 through which the bolt 160 passes. Considering the range of movement of the rod bar 130, the hole 170 may have an elliptic shape in which the z-axis direction in FIG. 2 is a major axis, and a length of the major axis is longer than a length of a minor axis. The door 110 may be provided with a nut member (not shown) to which the bolt 160 is fastened. The bolt 160 may be fastened to the nut member after passing through the hole 170. Due to the shape of the hole, the rod bar 130 may be moved up and down in conformity to the up and down movement of the handle 120. For effective fixation, it is preferable that the bolt 160, the hole 170, and the nut member are configured in a plurality of numbers.

In another embodiment, the rod bar 130 may be fixed to the door 110 by other fixing means in addition to the bolt/nut combination.

The handle 120 may be fixed to the rod bar 130 by a bolt/nut combination, but is not limited thereto. The position, shape, and size of the handle 120 are sufficient if the user can operate it up and down (in the z-axis direction of FIG. 2).

The handle 120 may be moved in such a manner that the user operates it up and down (in the z-axis direction of FIG. 2).

As described above, the rod bar 130 moves integrally with the handle 120. That is, when the user raises the handle 120 in the +z-axis direction of FIG. 2, as the handle 120 rises, the rod bar 130 and all components coupled to the rod bar 130 may move integrally by the displacement of the handle 120 raised.

The roller support 140 may be fixed to the rod bar 130 by a bolt/nut combination, but is not limited thereto, and other fixing methods may be applied.

The roller support 140 according to the present embodiments may include a main part 141, a first support part 142 extending vertically to one surface of the main part 141 at the upper end of the main part 141, and a second support part 143 extending vertically to one surface of the main part 141 at the lower end of the main part 141. A roller 150 may be coupled between the first support part 142 and the second support part 143. In one embodiment, an axis member located between the first support part 142 and the second support part 143 may be inserted into the central part of the roller 150, and the roller 150 may rotate around such an axis member.

The roller bracket 1200 according to the present embodiments may include a rail 1210, a first plate 1220 extending vertically from the rail 1210, and a second plate 1230 extending vertically from the first plate 1220 at one end of the first plate 1220 and extending parallel to the rail 1210. That is, the first plate 1220 may be a portion that connects the rail 1210 and the second plate 1230.

The roller 150 may rotate while being in contact with the rail 1210, and thus the roller 150 may move in the z-axis direction of FIG. 4 along the rail 1210. The number of rollers 150 is not limited, but the rollers 150 according to the present embodiments may be formed in a plurality of numbers.

The roller bracket 1200 can restrict the roller 150 or the roller support 140 from moving in one direction. The rail 1210 of the roller bracket 1200 can restrict the roller 150 or the roller support 140 from moving in one direction.

Here, the one direction may correspond to a direction in which the door 110 rotates around a portion where the door 110 is coupled to the case 1100. More specifically, the door 110 being opened while rotating around the hinge means that the door 110 moves in the +x-axis direction. At this time, the rail 1210 of the roller bracket 1200 can block the roller 150 or the roller support 140 to thereby restrict the door 110 from moving in the +x-axis direction.

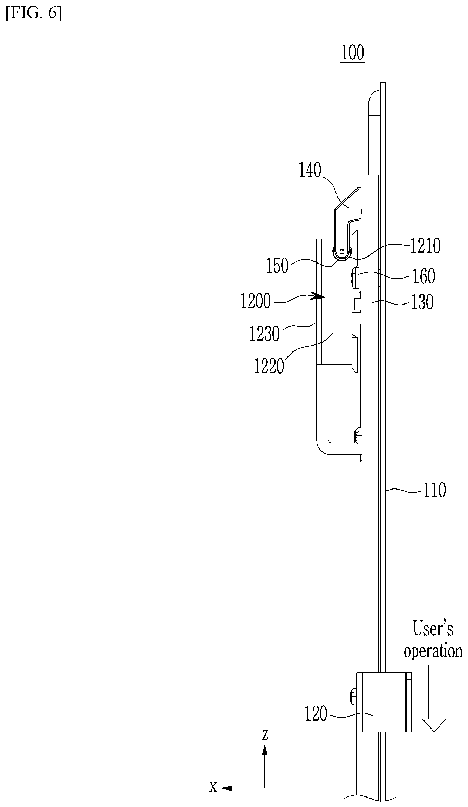

Meanwhile, as described above, the roller bracket 1200 can be coupled to the case 1100. At this time, the roller bracket 1200 can be fixed to the case 1100 by a bolt/nut combination, but is not limited thereto. For convenience of explanation, only the second plate 1230 is shown in FIGS. 4 and 6, and the case 110 is not shown, but the second plate 1230 of the roller bracket 1200 can be coupled to the case 110. The second plate 1230 may include a hole through which a bolt passes for a bolt/nut combination with the case 1100.

Taken together, the rail 1210 of the roller bracket 1200 may be a portion where the roller 150 moves while being in contact with it, and at the same time, may be a portion that restricts the roller 150 or the roller support 140 from moving in the +x-axis direction. Meanwhile, the second plate 1230 of the roller bracket 1200 may be a portion that is coupled with the case 1100, and the first plate 1220 of the roller bracket 1200 may be a portion that connects the rail 1210 and the second plate 1230.

In other words, the position, shape, and size of the handle 120 are sufficient if the user can operate it up and down (in the z-axis direction of FIG. 2), and the shape and size of the handle 120 are preferably as small as possible for the sake of the fine view and space utilization of the case 1100. That is, the user can open and close the door 110 even in a narrow space while minimizing the exposure of the door opening/closing system 100 to the outside of the case 1100.

The door 110 may include a gasket (not shown) or the like to satisfy specific waterproof requirements. The gasket may be made of an elastic material. For example, the gasket may be made of a rubber. Therefore, when pressure is applied to the gasket located between the door 110 and the case 1100, the shape of the gasket may be changed to block water, moisture, or gas from flowing in from the outside into the case 1100. The gasket may be located along the edge of the door 110.

FIG. 6 is a plan view of the door opening/closing system 100 of FIG. 4 as viewed along the +y-axis direction on the xz plane. Specifically, FIG. 6 is a plan view showing a point in time when the door opening/closing system 100 is closed.

Referring to FIGS. 4 and 6, when the roller 150 is at a height corresponding to the roller bracket 1200, the roller 150 or the roller support 140 can be restricted from moving in one direction by the roller bracket 1200.

Similarly to FIG. 6, FIG. 4 is also a diagram showing the point in time when the door opening/closing system 100 is closed, which shows a state in which the handle 120 is lowered in the -z-axis direction of FIG. 4 by the user's operation.

In particular, referring to FIGS. 4 and 6, it can be confirmed that the roller 150 abuts against the rail 1210 of the roller bracket 1200. That is, when the roller 150 is at a height corresponding to the roller bracket 1200, the roller 150 or the roller support 140 can be restricted from moving in the +x-axis direction of FIG. 4 by the roller bracket 1200. Therefore, in this case, the door 110 including the roller 150 and the roller support 140 can be closed.

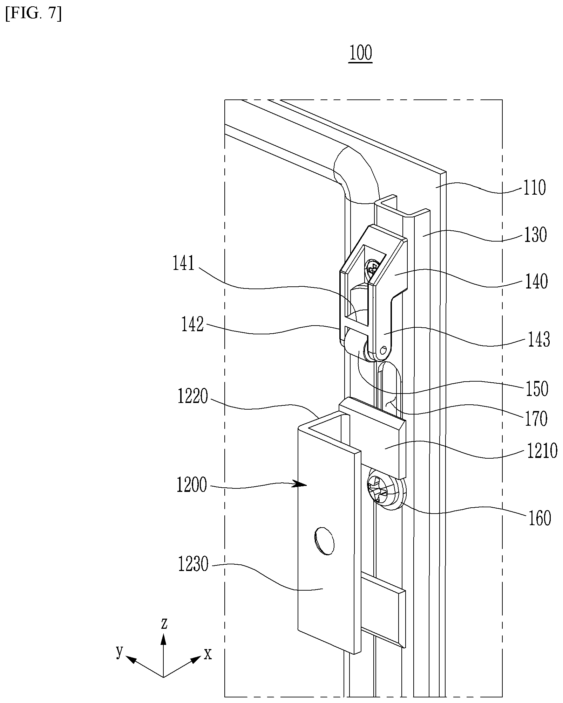

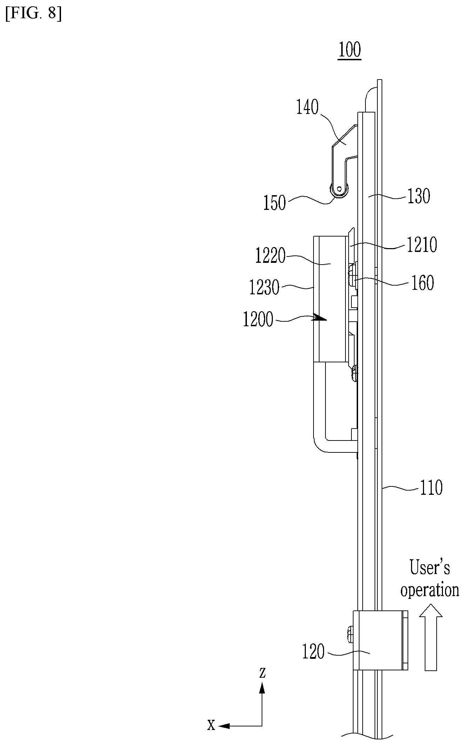

FIG. 7 is a perspective view showing a point in time when the rod bar 130 of FIG. 3 moves in the +z-axis direction due to the operation of a handle 120 by a user to open the door opening/closing system 100. FIG. 8 is a plan view of the door opening/closing system 100 of FIG. 7 as viewed along the +y-axis direction on the xz plane. That is, FIGS. 7 and 8 are diagrams showing the point in time when the door opening/closing system 100 is opened, which shows a state in which the handle 120 is raised in the +z-axis direction of FIG. 7 by the user's operation.

Referring to FIGS. 7 and 8, as the handle 120 rises in the +z-axis direction of FIG. 7, the rod bar 130 can move integrally with the handle 120. In addition, the roller support 140 coupled to the rod bar 130 and the roller 150 coupled to the roller support 140 can also move integrally. At this time, the roller 150 can move while rolling along the rail 1210.

When the handle 120 raises to a certain point, the roller 150 may deviate from the rail 1210 of the roller bracket 1200 and may not correspond to the rail 1210. That is, when the roller 150 does not correspond to the roller bracket 1200 at a position higher than the roller bracket 1200, the roller 150 or the roller support 140 can move in the +x-axis direction in FIG. 4 because its movement is not restricted by the roller bracket 1200. In this state, the door 110 can be opened.

Through this opening/closing mechanism, the door opening/closing system 100 except for the handle 120 is not exposed to the outside, and the door 110 can be opened and closed through the operation of the handle 120 even in a narrow space. Thereby, it is possible to improve the fine view and space utilization of a product.

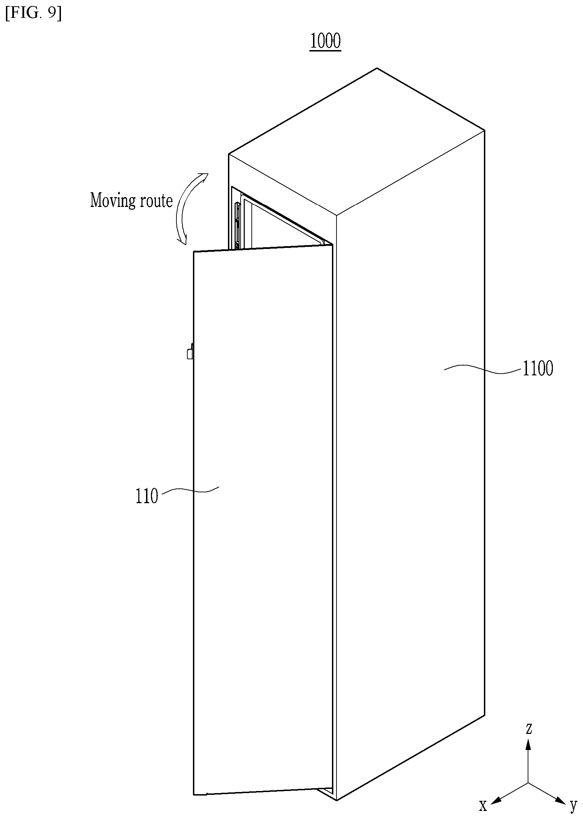

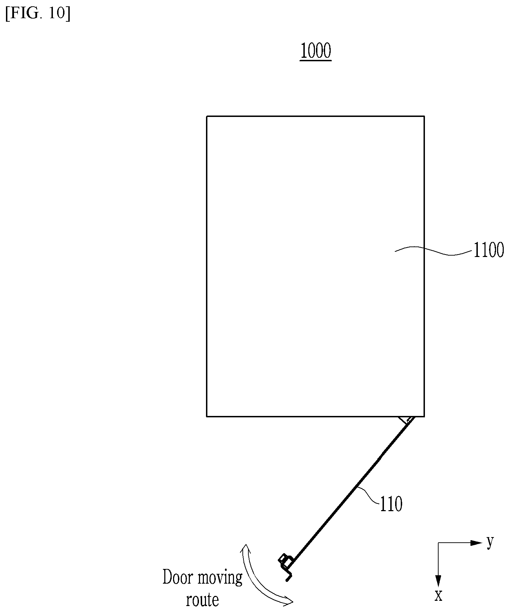

FIG. 9 is a perspective view showing an energy storage device according to certain embodiments of the present disclosure. FIG. 10 is a plan view of the energy storage device of FIG. 9 as viewed along the -z-axis direction on the xy plane.

Referring to FIGS. 9 and 10, the direction in which the roller 150 or the roller support 140 is restricted from moving by the roller bracket 1200 may be the direction of rotation of the door 110 centered around the hinge. That is, as described above, the door 110 may rotate around the axis of the hinge (z-axis in FIG. 9) by which the door 110 is coupled to the case 1100. However, since the roller 150 or the roller support 140 is restricted from moving by the roller bracket 1200, the door 110 may be restricted from rotating. In this case, the door 110 may be closed.

On the contrary, if the roller 150 or roller support 140 is not restricted from moving by the roller bracket 1200 through the upward movement of the handle 120 (in the +z-axis direction of FIG. 9), the door 110 can be opened while rotating around the hinge. That is, the door 110 can be opened along the moving route of FIGS. 9 and 10.

Referring again to FIGS. 4 to 8, when the rod bar 130 moves up and down, the roller 150 can move along the rail 1210 of the roller bracket 1200.

When the user moves the handle 120 up and down (in the +z-axis direction of FIG. 8), the rod bar 130 can move integrally with the handle 120. In accordance with the movement of the rod bar 130, the roller support 140 and the roller 150 coupled to the rod bar 130 can move integrally. At this time, if the roller 150 corresponds to the roller bracket 1200, that is, if the roller 150 abuts against the roller bracket 1200, the roller 150 can move up and down along the rail 1210 by the up and down movement of the rod bar 130. Through this series of processes, the user can open and close the door 110 by operating the handle 120.

According to certain embodiments of the present disclosure, an energy storage device comprising a door opening/closing system 100 is provided. A battery pack or a battery rack can be accommodated inside the case 1100.

The case 1100 capable of accommodating the battery pack or the battery rack can be opened and closed through the door opening/closing system 100. According to certain embodiments of the present disclosure, the user can open and close the case 1100 only with simple operations of the handle 120. Since only the handle 120 among the components of the door opening/closing system 100 exposes or protrudes outside the door 110, an energy storage device that can secure the fine view and space utilization of a product can be provided.

In the embodiments above, expressions indicating directions such as "front," "rear," "left," "right," "up," and "down" have been used. These expressions are used only to facilitate the description, and may vary, for example, depending on the location of a target object or an observer.

Although the present disclosure has been illustrated and described above with reference to preferred embodiments thereof, the technical scope of the present disclosure is not limited to the embodiments, and also includes various modifications and variations made by one of ordinary skill in the art using the concepts defined in the claims attached therewith.

### [Description of Reference Numerals]

100: door opening/closing system
110: door
120: handle
130: rod bar
140: roller support
150: roller
1100: case

## Claims

1. A door opening/closing system applied to a case having an accommodation space therein,
wherein the door opening/closing system comprises:
a door that can move in one direction to cover the accommodation space;
a rod bar coupled to the door;
a handle coupled to the rod bar;
a roller support coupled to the rod bar and moving integrally with the rod bar;
a roller coupled to an end of the roller support; and
a roller bracket coupled to the case,
wherein when a user moves the handle up or down, the rod bar moves integrally with the handle, and
wherein the roller bracket comprises a rail that extends along moving route of the roller and corresponds to the roller.

2. The door opening/closing system according to claim 1,
wherein when the roller is at a height corresponding to the roller bracket, the roller or the roller support is restricted from moving in the one direction by the roller bracket.

3. The door opening/closing system according to claim 1,
wherein the one direction is a direction in which the door rotates around the portion where the door is coupled to the case.

4. The door opening/closing system according to claim 1,
wherein the rail of the roller bracket restricts the roller or the roller support from moving in the one direction.

5. The door opening/closing system according to claim 1,
wherein when the rod bar moves up and down, the roller moves along the rail of the roller bracket.

6. The door opening/closing system according to claim 1,
wherein the roller bracket comprises a first plate extending vertically from the rail; and a second plate extending vertically from the first plate at one end of the first plate and parallel to the rail.

7. The door opening/closing system according to claim 6,
wherein the second plate is coupled to the case.

8. The door opening/closing system according to claim 6,
wherein the first plate connects the rail and the second plate.

9. An energy storage device comprising a door opening/closing system according to claim 1.

10. The energy storage device according to claim 9,
wherein a battery pack or a battery rack is accommodated inside the case.
